Europäisches Patentamt

European Patent Office

Office européen des brevets

(19)

(11) Numéro de publication: **0 056 544**
**B1**

(12) **FASCICULE DE BREVET EUROPEEN**

(45) Date de publication du fascicule du brevet: **17.04.85**

(51) Int. Cl.⁴: **G 01 M 1/04**

(21) Numéro de dépôt: **81402010.3**

(22) Date de dépôt: **16.12.81**

(54) **Nez d'équilibreuse de roues de véhicules.**

(30) Priorité: **09.01.81 FR 8100270**

(43) Date de publication de la demande:
**28.07.82 Bulletin 82/30**

(45) Mention de la délivrance du brevet:
**17.04.85 Bulletin 85/16**

(84) Etats contractants désignés:
**AT BE CH DE GB IT LI LU NL SE**

(56) Documents cités:
**FR-A-2 124 955**
**FR-A-2 288 304**
**FR-A-2 377 624**
**FR-A-2 447 546**

(73) Titulaire: **Etablissements M. Muller & Cie**
**50-56, rue des Tournelles**
**F-75140 Paris Cedex 03 (FR)**

(72) Inventeur: **Coetsier, Paul**
**4, Impasse Jean Macé**
**F-77500 Chelles (FR)**

(74) Mandataire: **Tony-Durand, Serge**
**Cabinet Tony-Durand 22, Boulevard Voltaire**
**F-75011 Paris (FR)**

Courier Press, Leamington Spa, England.

## Description

La présente invention a pour objet un nez d'équilibreuse de roues de véhicules, comportant une broche susceptible d'être entraînée en rotation et des moyens de retenue d'une roue à équilibrer.

Les équilibreuses connues sont munies d'une broche rotative comportant un nez sur lequel est monté un système de support et de fixation de la jante de la roue à équilibrer.

Ce système de support et de fixation de la roue est agencé différemment, selon que la jante de la roue est ouverte ou fermée, c'est-à-dire que la jante présente un alésage central ou non.

Dans le cas où la jante présente un alésage central, la roue est habituellement centrée sur un montage spécial dit montage à cône, ou directement sur le nez de l'équilibreuse au moyen d'un cône monté coaxialement à la broche et pouvant coulisser sur celle-ci, ce cône venant s'engager dans l'alésage de la jante soit par l'avant de celle-ci, soit par l'arrière, c'est-à-dire du côté, de l'intérieur du nez de l'équilibreuse. Dans ces deux cas, une fois le cône de centrage mis en place, la roue est serrée sur le nez de l'équilibreuse ou sur le montage adéquat au moyen d'un dispositif extérieur constitué d'un écrou à bras monté sur une vis engagée coaxialement dans la broche, et qui applique une cloche de poussée soit sur la jante, dans le cas du centrage par cône engagé par l'arrière, soit sur le cône lui-même, dans le cas où ce dernier est engagé par l'avant de la jante.

On connaît un troisième type de montage venant se fixer sur le nez d'équilibreuse, destiné aux roues fermées, qui doivent être centrées par leurs trous de fixation. Le montage, dit montage universel pour jantes fermées, comporte alors une couronne fixée coaxialement à la broche, dans laquelle est ménagée une série de trous recevant les axes de rotation de manetons correspondants, en nombre égal au nombre de trous de la jante à fixer, c'est-à-dire 3 à 6 selon le type de roue. Chaque maneton est équipé d'un goujon de fixation de la jante, qui est maintenue serré sur les manetons par des écrous vissés sur les goujons. Complémentairement, un disque dans lequel sont formées des rainures à l'intérieur desquelles peuvent coulisser des pions solidaires des manetons, disposé coaxialement à la broche permettant de placer leurs goujons de fixation à l'entraxe correspondant aux trous de la jante.

Ainsi, il est nécessaire de disposer d'un montage amovible s'adaptant sur le nez d'équilibreuse et différent pour chacun des types de roue précités. Cela entraîne des coûts de fabrication importants et oblige à des manipulations répétées chaque fois que l'on change de type de roue et de montage.

Cependant FR—A—2.288.304 décrit un nez d'équilibreuse de roues de véhicules universel pour différents types de roues, aussi bien avec centrage central qu'avec centrage par les trous de fixation. En combinaison avec une broche susceptible d'être entraînée en rotation, ce nez d'équilibreuse comporte d'une part:

— des moyens pour équilibrer des roues nécessitant un centrage par cône de centrage et d'autre part
— des moyens pour équilibrer des roues nécessitant un centrage par leurs trous de fixation.

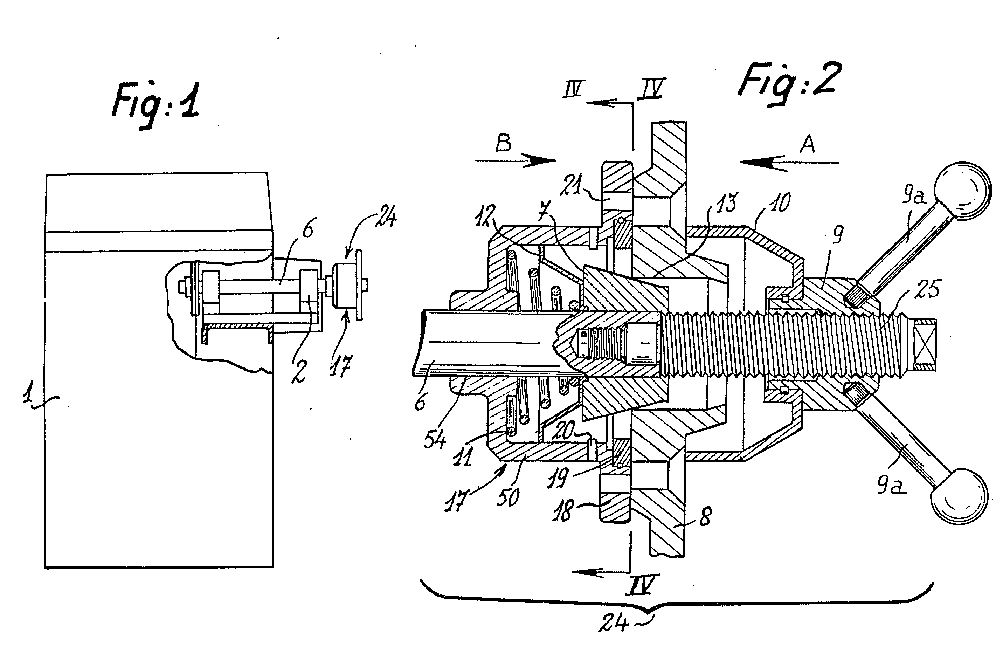

Quant au brevet FR—A—2.124.955, il décrit un nez d'équilibreuse susceptible d'équilibrer aussi bien des roues nécessitant un centrage par cône introduit par l'avant de la roue (voir figure 1) que des roues nécessitant un centrage par cône introduit par l'arrière de la roue (voir figure 2). Ces deux solutions peuvent être obtenues avec une même broche, en adaptant, suivant le cas, des moyens de montage conçus pour l'un ou l'autre de ces deux cas.

Toutefois les solutions ainsi prévues ne correspondent toujours pas à un nez universel utilisable indifféremment pour chacun des types de roue et de montage rappelés précédemment, et ce, sans qu'il soit nécessaire de démonter au préalable certains de ses organes constitutifs. C'est pourquoi l'invention a pour objet un tel nez universel d'équilibreuse.

A cet effet ce nez d'équilibreuse comprend:

— une broche susceptible d'être entraînée en rotation;
— des premiers moyens pour équilibrer des roues nécessitant un centrage par cône de centrage;
— des seconds moyens pour équilibrer des roues nécessitant un centrage par les trous de fixation desdites roues;

lesdits premiers et seconds moyens d'équilibrage comportant en combinaison un corps creux de révolution fixé coaxialement à la broche, présentant une couronne extérieure destinée à servir d'appui en butée à la jante de la roue, cette couronne délimitant l'ouverture centrale du corps.

Suivant l'invention, ce nez d'équilibreuse est caractérisé en ce que ces premiers et seconds moyens d'équilibrage comprennent également:

a) une coupelle logée à l'intérieur du corps, coaxiale à la broche, et sollicitée axialement vers l'ouverture centrale du corps par un organe élastique prenant appui contre le fond du corps, cette coupelle exerçant sur le cône de centrage, lorsque ce dernier est engagé dans la jante par l'arrière de celle-ci, une poussée de sens contraire à celle exercée par un dispositif extérieur de serrage de la jante contre le corps, dispositif extérieur de serrage qui est également utilisé pour serrer le cône de centrage devant être engagé dans la jante par l'avant de celle-ci;

b) un disque monté de manière librement rotative dans la face frontale de la couronne du côté de l'ouverture centrale du corps, présentant une série de rainures inclinées d'un angle prédéterminé sur les rayons du disque et agencées de manière que pour une position angulaire déterminée du disque l'une de leurs extrémités se trouve en face de trous correspondants ménagés dans la couronne, cet agencement permettant d'articuler sur la couronne une série de manetons pivotants comportant chacun un axe de pivotement susceptible d'être engagé dans un desdits trous ménagés dans la couronne, un pion faisent saillie du côté du disque, de façon à pourvoir veuir coulisser dans la rainure correspondante et un goujon de fixation de la jante, lorsque la roue à équilibrer doit être fixée par les trous de sa jante qui sont alors traversés par les goujons des manetons, ces derniers étant en nombre égal au nombre de trous de la jante

c) des moyens aptes à limiter le déplacement axial de la coupelle sous la poussée de l'organe élastique, lorsque le dispositif n'est pas utilisé avec un cône de centrage engagé dans la jante par l'arrière de celle-ci.

Ce dispositif permet de monter sur le nez de l'équilibreuse indifféremment des roues ouvertes centrées par un cône introduit par la face arrière de la jante, des roues ouvertes centrées par un cône introduit par la face avant de la jante, et des roues fermées devant être positionnées sur le nez par leurs trous de fixation. En effet, le disque monté dans le couronne du corps ne fait pas saillie par rapport à la face frontale de celle-ci, et son diamètre intérieur est supérieur au diamètre du plus grand cône utilisé, fe sorte qu'il n'est pas nécessaire de l'enlever lorsque l'on veut positionner des roues à l'alésage central sur le nze de l'équilibreuse.

De même lorsqu'on exécute le montage d'une roue ouverte avec centrage par le cône introduit sur l'arrière de la roue, le cône étant dimensionné de façon à pouvoir entrer à l'intérieur du corps, vient s'appliquer sur la coupelle et la fait reculer vers le fond du corps à l'encontre de la force antagoniste exercée par son organe de rappel. Dans ce cas, la cloche de poussée du dispositif extérieur de serrage vient s'appliquer sur la jante.

Dans le cas du montage d'une roue ayant un alésage central et devant être centrée par l'avant, on introduit le cône de centrage par la face avant de la jante dans l'alésage de celle-ci; la cloche de poussée est appliquée contre le cône, tandis que la coupelle sollicitée par son organe de rappel, vient affleurer le plan vertical dans lequel se trouvent les faces frontales du disque et de la couronne.

Lorsqu'on monte une roue fermée, au moyen du systéme de manetons pivotants, la coupelle poussée par son ressort de rapel affleure également le plan vertical précité, et ne gêne en aucune façon le montage de la jante.

L'invention permet donc avantageusement de réunir en un seul dispositif utilisable indifféremment pour chacun des types de roues et de montage en cause, des agencements qui nécessitaient jusqu'à présent des montages distincts, devant être montés tour à tour sur la broche de l'équilibreuse. Ce nez universel permet donc une économie importante sur les coûts de fabrication, et supprime des manipulations relativement longues et fastidieuses.

D'autres particularités et avantages de l'invention apparaîtront au cours de la description qui va suivre. Aux dessins annexés, données à titre d'exemples non limitatifs, on a représenté plusieurs formes de réalisation du nez d'équilibreuse selon l'invention.

— La figure 1 est une vue en élévation avec arrachements d'une équilibreuse de roues de véhicules pourvue d'un nez selon l'invention.

— La figure 2 est une vue en coupe axiale suivant II—II de la figure 4 d'une première forme de réalisation du nez d'équilibreuse selon l'invention, utilisé dans le cas du montage d'une roue ouverte avec cône de centrage introduit par l'arrière.

— La figure 3 est une vue analogue à la figure 2 montrant le montage d'une roue ouverte centrée par un cône introduit par l'avant de la roue.

— La figure 4 est une vue en élévation frontale suivant IV—IV de la figure 2.

— La figure 5 est une vue mi-coupe, mi-élévation suivant V—V de la figure 6, montrant l'utilisation du nez pour l'équilibrage d'une roue fermée, assujettie par ses trous de fixation.

— La figure 6 est une vue en élévation suivant VI—VI de la figure 5.

— La figure 7 est une vue en coupe partielle suivant VII—VII de la figure 6.

— La figure 8 est une vue mi-coupe axiale, mi-élévation d'une forme de réalisation du nez, montrant son utilisation pour l'équilibrage de roues de motos.

— La figure 9 est une vue mi-coupe axiale, mi-élévation d'une autre forme de réalisation du nez d'équilibreuse montrant son utilisation pour l'équilibrage de roues particulières, telles que des roues de poids lourds ou de véhicules utilitaires.

— La figure 10 est un vue en coupe axiale et élévation partielle d'une variante du nez de l'équilibreuse, dont le corps est adapté pour être fixé sur un autre nez d'équilibreuse.

On voit sur la figure 1 une équilibreuse 1 comprenant des paliers 2 dans lesquels est montée une broche 6 sur l'extrémité de laquelle est disposé un nez 24 destiné à recevoir une roue de véhicule non représentée pour en permettre l'équilibrage.

On décrira une première forme de réalisation du nez d'équilibreuse selon l'invention en se référant aux figures 2 à 7.

Le nez illustré aux figures 2 à 7 comprend la combinaison des organes suivants:

a) un corps creux de révolution désigné par la référence générale 17, fixé coaxialement à l'arbre de broche 6, présentant une couronne extérieure 18 destinée à servir d'appui en butée à la jante 8 de la roue lorsque celle-ci est montée avec un cône de centrage coaxial à la broche 6, comme cela sera expliqué en détail ci-après;

b) une coupelle 12 percée d'une ouverture centrale correspondant au diamètre de l'arbre 6 et logée à l'intérieur de la partie cylindrique 50 du corps 17, cette coupelle 12 étant sollicitée vers l'ouverture centrale du corps 17 par un organe élastique 11 prenant appui contre le fond de la partie cylindrique 50;

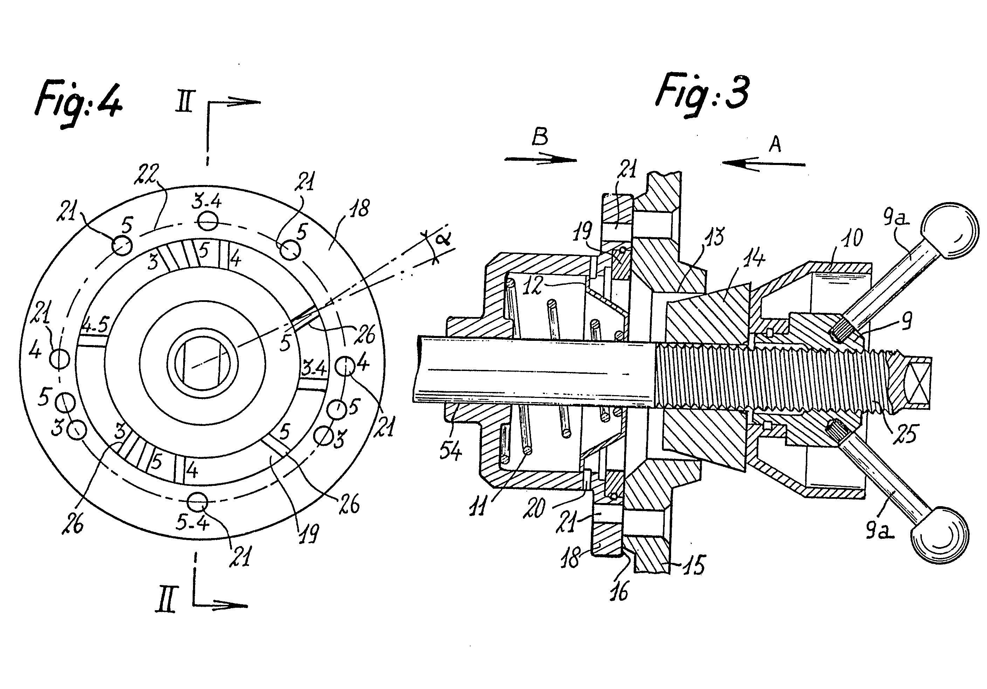

c) et un disque 19 encastré de manière librement rotative dans la face frontale de la couronne 18, présentant une série de rainures 26 inclinées d'un angle prédéterminé α (figure 4) sur les rayons du disque 19; ces rainures 26 sont agencées pour coopérer avec des trous 21 correspondants ménagés dans la face frontale de la couronne 18, pour permettre l'équilibrage de roues dont la jante est fermée.

La partie 50 du corps 17 est fixée à la broche 6 par tout accouplement approprié 54, par exemple par frettage, par collage ou clavetage etc.

Dans l'exemple décrit, l'organe élastique de rappel 11 est un ressort hélicoïdal enroulé coaxialement autour de la broche 6, et sollicitant la coupelle 12 en translation parallèlement à l'axe de la broche 6, vers l'ouverture du corps 17. Ce déplacement en translation est limité de façon que la face extérieure de la coupelle 12 (qui a une conformation tronconique), affleure approximativement le plan vertical contenant la face frontale de la couronne 18, lorsqu'aucune force antagoniste ne s'oppose à la poussée du ressort 11.

A cet effet, une particularité de l'invention prévoit des moyens d'arrêt de la coupelle 12, constitués dans l'exemple décrit par des pions 20 encastrés radialement à l'intérieur du corps 17, à peu près à la jonction de la couronne 18 et de la partie 50. Dans ces conditions, la forme tronconique de la coupelle 12 est déterminée de façon que la face extérieure de celle-ci vienne effectivement se placer approximativement dans le plan vertical contenant la face frontale de la couronne 18 lorsqu'aucune force antagoniste ne s'oppose au ressort 11 (figure 3), la base annulaire de la coupelle 12 venant en butée contre les pions 20.

Les trous 21 percés dans la couronne 18 sont placés sur une même circonférence 22. Ils possèdent d'une part un premier sommet commun 3—4 pour la fixation des jantes à 3, 4 et 6 trous, et d'autre part un second sommet commun 4—5 pour la fixation des jantes à 4 et 5 trous. Ainsi deux trous 21 sont judicieusement agencés sur la circonférence 22 à des écarts angulaires prédéterminés, afin de permettre la fixation sur la couronne 18 de jantes fermées, présentant un nombre de trous de fixation quelconque compris entre 3 et 6.

Les rainures 26 formées sur le disque 19 sont en nombre égal aux trous 21 et positionnées de telle manière que l'une de leurs extrémités se trouve en face des trous correspondants 21 pour une position angulaire déterminée du disque 19. Il existe ainsi une rainure 26 commune, coopérant à la fixation des jantes à 3, 4 et 6 trous, et d'autre part une deuxième rainure 26 commune coopérant à la fixation des jantes à 4 et 5 trous.

Le disque 19, libre en rotation, est maintenu axialement par un jonc 27 logé dans des gorges annulaires correspondantes de la couronne 18 et du disque 19.

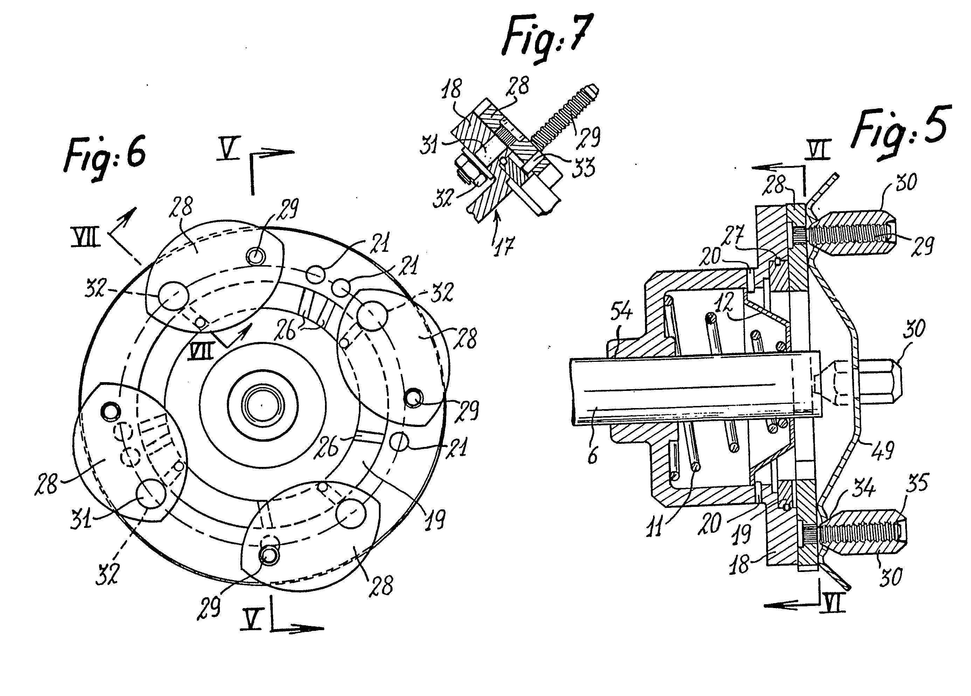

En outre, pour l'équilibrage de roues à jante fermée, devant être assujetties au corps 17 par leurs trous de fixation, le nez visé par l'invention comprend un jeu de manetons 28 en nombre égal auxtrous de la jante 49 (figures 5 et 6), quatre manetons 28 ayant ainsi été représentés à la figure 6. En pratique, ce nombre peut atteindre cinq.

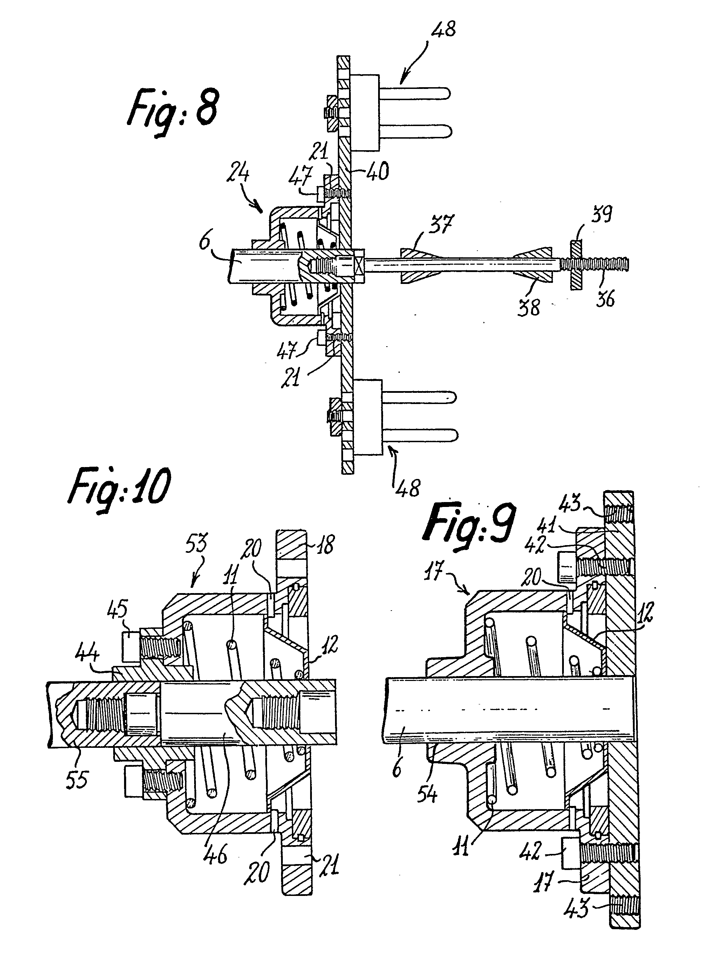

Chaque maneton 28 est pourvu d'un axe 31 pouvant être introduit dans un trou 21 et permettant l'articulation du maneton 28 sur la couronne 18, l'axe 31 étant bloqué par un écrou 32 sur la couronne 18 (figure 7). Chaque maneton 28 est également pourvu d'un goujon 29 prévu pour traverser un trou de la jante 49 afin de fixer celle-ci au corps 17 après serrage d'un écrou 30 (figure 5) sur ce goujon 29.

Enfin, chaque maneton 28 est équipé d'un pion 33 faisant saillie du côté du disque 19, de façon à pouvoir venir coulisser dans une rainure correspondante 26 afin de guider la maneton 28 en rotation (voir figure 6). Cet agencement permet de façon connue en soi, d'obtenir une évolution concentrique des axes des goujons 29 par pivotement simultané des manetons 28 autour de leurs axes 31.

On décrira maintenant le mode d'utilisation du nez d'équilibreuse qui vient d'être décrit, dans les différents cas précités, c'est-à-dire successivement pour équilibrer une roue à jante ouverte devant être centrée en introduisant le cône 7 par l'arrière de la roue, une roue à jante ouverte devant être centrée par introduction du cône sur la face avant de la roue, puis une roue à jante fermée devant être solidarisée avec le nez par ses trous de fixation. On décrira ensuite différentes variantes de réalisation du nez selon l'invention.

1—Equilibrage d'une roue à jante ouverte avec centrage par l'arrière (figure 2).

L'utilisateur monte la vis 25 dans l'arbre de broche 6, et place le cône 7 approprié au diamètre de l'alésage arrière 13 de centrage de la jante 8. Après avoir posé la jante 8 sur le cône 7, l'opérateur visse l'écrou 9 à bras 9a muni de la cloche 10 de poussée, afin de centrer la jante 8 sur le cône 7. Ce centrage est obtenu grâce à la combinaison, d'une part de l'effort de poussée de la cloche 10 sur la jante 8 dans le sens de la flèche A, et d'autre part de l'effort de retenue exercé par le ressort 11 venant en appui sur la coupelle 12, qui elle-même pousse le cône 7 dans le sens de la flèche B.

Ce mode de centrage de la jante 8 est utilisé lorsque l'alésage 13 nécessite un centrage sur l'arrière de la jante.

2—Utilisation du nez pour une roue à jante ouverte avec centrage par un cône introduit sur la face avant (figure 3).

L'utilisateur monte la vis 25 dans la broche 6, et choisit le cône de centrage 14 approprié au diamètre de l'alésage 18 de la jante 15.

L'utilisateur place l'ensemble roue 15-cône 14 sur la broche 6 et visse l'écrou 9 à bras 9a muni de la cloche de poussée 10 convenablement retournée, afin que la cloche 10 exerce sur le cône 14 et par conséquent sur la jante 15 une poussée axiale dans le sens de la flèche A. Lorsque la jante 15 arrive en butée sur la face frontale de la couronne 18, un effort dans le sens de la flèche B apparît sur la jante 15. La combinaison des efforts antagonistes exercés sur la jante 15 dans les sens A et B permet le centrage de celle-ci sur son alésage avant 18. Il convient de remarquer que le disque 19, prévu pour le montage des roues devant être centrées par leurs trous de fixation, n'a pas besoin d'être démonté dans les deux cas d'utilisation décrits ci-dessus, c'est-à-dire pour le montage de roues devant être centrées par leur alésage central.

3—Utilisation du nez en montage universel pour la fixation d'une roue à jante fermée, devant être centrée par ses trous de fixation (figures 4 à 6).

Suivant le nombre des trous de fixation de la jante 49 de la roue à équilibrer, l'opérateur place sur la couronne 18 un nombre de manetons 28 correspondant, en introduisant leurs axes 31 dans les trous d'articulation 21, et leurs pions 33 dans les rainures de guidage 26. L'opérateur relève l'entraxe des trous de fixation de la jante 49, positionne l'entraxe des manetons 28 suivant cette cote, de façon connue en soi, et approche les écrous 32 pour exécuter un pré-serrage modéré des manetons 28 dans cette position.

L'opérateur place ensuite la roue à équilibrer sur les goujons 29 et centre celle-ci en vissant les écrous 30 munis de cônes de centrage 34 et 35. la roue se trouve centrée du fait du déplacement suivant des cercles concentriques de chaque axe 29 d'un maneton 28. L'opérateur peut alors terminer son serrage des écrous 32.

Il convient de noter que la vis 25 peut être désaccouplée de l'arbre de broche 6, afin de pouvoir monter les roues à jante fermée sur le centre (figure 5).

Il y a lieu également de noter que dans ce cas d'utilisation du nez selon l'invention pour l'équilibrage de roues devant être centrées par leurs trous de fixation, le ressort 11 et la coupelle 12 viennent en butée contre les pions d'arrêt 20, et n'ont pas besoin d'être démontés.

L'invention réalise ainsi un nez universel présentant une combinaison de moyens telle que ce nez peut être indifféremment utilisé pour les trois types de roues précités, sans qu'il soit nécessaire de démonter ni le disque 19, ni le ressort 11 et la coupelle 12. On supprime ainsi de nombreuses manipulations et on obtient une réduction substantielle du prix de revient de l'équilibreuse, par rapport aux réalisations connues qui nécessitent un montage particulier pour chaque type de roue à équilibrer.

Le nez selon l'invention n'est pas limité aux cas d'utilisation décrits ci-dessus, et peut encore être mis en oeuvre pour d'autres applications qui seront maintenant décrites en référence aux figures 8 à 10.

4—Autres possibilités d'utilisation du nez selon l'invention.

Dans la variante de réalisation illustrée à la figure 8, le nez 24 est utilisé pour l'équilibrage de roues de motos, et est à cet effet muni d'un plateau 40 pourvu d'organes de fixation 48 de la roue de moto (non représentée). Le plateau 40 est solidarisé avec la couronne 18 par des vis 47 introduites dans les trous 21 de la couronne 18. Un axe 36 est fixé à la broche 6 et porte deux cônes coulissants 37, 38 aptes à centrer la jante de la roue sur l'axe 36. Un écrou 39 coaxial à l'axe 36 coopère également au centrage de la roue.

Dans la variante de la figure 9, le nez 24 est destiné plus particulièrement à l'équilibrage de certaines roues telles que des roues de poids lourds, de certains véhicules de tourisme, de véhicules utilitaires etc., ou encore de tout autre corps à équilibrer. Le nez 24 est alors muni d'un plateau 41 centré sur la broche 6 et fixé à la couronne 18 par des vis 42 traversant les trous 21. Des trous 43 correspondant aux trous de la roue à équilibrer sont percés sur la périphérie du plateau 41. On monte donc un plateau particulier 41 ayant des trous 43 d'entraxe correspondant à chaque roue à équilibrer.

Enfin, dans la variante de la figure 10, le corps 53 ne présente plus un accouplement 54 sur la broche 6 comme dans les cas précédents, ce qui permet de le fixer de manière amovible sur un autre nez 44 d'une équilibreuse quelconque, par l'intermédiaire de vis 45 qui viennent s'introduire dans des trous correspondants percés dans le corps 53. Un axe 46 remplaçant la broche 6 vient complémentairement se fixer axialement dans l'arbre de broche 55 du nez 44.

Dans ce cas, le nez selon l'invention n'est plus par conséquent fixé à demeure sur l'arbre de broche, mais est adapté pour pouvoir être monté sur un nez d'une équilibreuse quelconque. Une fois ce montage exécuté, le montage peut être utilisé pour équilibrer différents types de roues comme décrit ci-dessus.

L'invention n'est pas limitée aux différentes formes de réalisation décrites et peut comporter de nombreuses variantes d'exécution.

Ainsi le montage universel décrit en référence aux Figures 4 à 7 peut être remplacé pour tour dispositif permettant d'obtenir une évolution concentrique des goujons 28, par exemple un montage à base d'engrenages, ou par des rainures en T dans lesquelles viennent s'engager les goujons 29 de fixation des roues, ces rainures étant réalisées dans la couronne 18. Le système d'entraînement par engrenages peut être prévu entre les manetons 28 et le disque 19.

**Revendications**

1. Nez d'équilibreuse de roues de véhicules, comprenant:

— une broche (6) susceptible d'être entraînée en rotation;
— des premiers moyens pour équilibrer des roues nécessitant un centrage par cône de centrage (7, 14);
— des seconds moyens pour équilibrer des roues nécessitant un centrage par les trous de fixation desdites roues;

lesdits premier et seconds moyens d'équilibrage comportant en combinaison un corps creux de révolution (17) fixé coaxialement à la broche (6), présentant une couronne extérieure (18) destinée à servir d'appui en butée à la jante (8, 15, 49) de la roue, cette couronne délimitant l'ouverture centrale du corps, caractérisé en ce que ces premiers et seconds moyens d'équilibrage comprennent également:

a) une coupelle (12) logée à l'intérieur du corps (17), coaxiale à la broche (6), et sollicitée axialement vers l'ouverture centrale du corps (17) par un organe élastique (11) prenant appui contre le fond du corps (17), cette coupelle (12) exerçant sur le cône de centrage (7), lorsque ce dernier est engagé dans la jante (8) par l'arrière de celle-ci, une poussée de sens contraire à celle exercée par un dispositif extérieur de serrage (9, 10, 25) de la jante (8) contre le corps (17), dispositif extérieur de serrage qui est également utilisé pour serrer le cône de centrage (14) devant être engagé dans la jante (15) par l'avant de celle-ci;

b) un disque (19) monté de manière librement rotative dans la face frontale de la couronne (18) du côté de l'ouverture centrale de curps, presentant une série de rainures (26) inclinées d'un angle prédéterminé (α) sur les rayons du disque (19), agencées de manière que pour une position angulaire déterminée du disque (19) l'une de leurs extrémités se trouve en face de trous correspondants (21) ménagés dans la couronne (18), cet agencement permettant d'articuler sur la couronne (18) une série de manetons (28) pivotants comportant chacun un axe (31) de pivotement susceptible d'être engagé dans un desdits trous (21) ménagés dans la couronne, un pion (33) faisant saillie du côté du disque (19), de façon à pourvoir veins coulisser dans la rainure correspondante (26) et un goujon (29) de fixation de la jante (49), lorsque la roue à équilibrer doit être fixée par les trous de sa jante (49) qui sont alors traversés par les goujons (29) des manetons (28), ces derniers étant en nombre égal au nombre de trous de la jante (49).

c) des moyens (20) aptes à limiter le déplacement axial de la coupelle (12) sous la poussée de l'organe élastique (11), lorsque le dispositif n'est pas utilisé avec un cône de centrage (7) engagé dans la jante par l'arrière de celle-ci.

2. Nez d'équilibreuse selon la revendication 1, caractérisé en ce que les moyens aptes à limiter la déplacement axial de la coupelle (12) consistent en des pions (20) encastrés radialement à l'intérieur du corps (17), et contre lesquels la périphérie de la coupelle (12) vient en butée, la position de ces pions encastrés radialement à l'interieur du corps et la forme de la coupelle (12) étant telles que la face de celle-ci dirigée vers l'ouverture centrale du corps se trouve alors placée approximativement dans le plan vertical contenant la face frontale de la couronne (18) du côté de l'ouverture centrale du corps.

3. Nez d'équilibreuse selon l'une des revendications 1 et 2, caractérisé en ce que le disque (19) est maintenu assujetti au corps (17) par un jonc (27) logé dans des gorges annulaires correspondantes du corps (17) et du disque (19).

4. Nez d'équilibreuse selon l'une des revendications 1 à 3, caractérisé en ce que, pour l'équilibrage de roues de motos, il comporte un plateau (40) pourvu d'organes de fixation (48) de la roue, solidarisé avec la couronne (18) du corps (17) par des vis (47) introduites dans le trous de la couronne (18), ainsi qu'une axe (36) fixé coaxialement à la broche (6) et pourvu de cônes coulissants (37, 38) aptes à centrer la jante de la roue sur l'axe (36).

5. Nez d'équilibreuse selon l'une des revendications 1 à 3, caractérisé en ce que, pour l'équilibrage de certaines roues telles que roues de poids lourds et de véhicule utilitaires, il est muni d'un plateau (41) centré sur la broche (6) et fixé à la couronne (18) par des vis (42) traversant les trous de celle-ci, des trous (43) correspondant aux trous de la roue à équilibrer étant percés à la périphérie de ce plateau (41).

6. Nez d'équilibreuse selon l'une des revendications 1 à 5, caractérisé en ce que le corps (17) est fixé à demeure sur la broche (6), ou adaptable sur un autre nez (44) d'équilibreuse, avec lequel il peut être solidarisé par exemple au moyen de vis (45).

## Patentansprüche

1. Vorderteil einer Radauswuchtmaschine mit:

— einem drehbar gelagerten Auswuchtdorn (6),
— ersten Radauswuchtmitteln für Räder, die eine Zentrierung durch einen Zentrierkegel (7, 14) erfordern,
— zweiten Radauswuchtmitteln für Räder, die eine Zentrierung durch die Befestigungs löcher der genannten Räder erfordern,

wobei die genannten ersten und zweiten Auswuchtmittel zusammenwirkend einen hohlen Umlaufkörper (17) besitzen, der am Dorn (6) koaxial befestigt ist und einen Aussenkranz (18) zur Anlage und Befestigung der Radfelge (8, 15, 49) aufweist, wobei dieser Aussenkranz die zentrale Öffnung des Umlaufkörpers abgrenzt, dadurch gekennzeichnet, dass diese ersten und zweiten Auswuchtmittel auch folgende Teils aufweisen:

a) eine Stützscheibe (12), die innerhalb des Umlaufkörpers (17) und koaxial zum Dorn (6) gelagert sowie von einem federnden Organ (11), das sich am Boden des Umlaufkörpers (17) abstützt, zur zentralen Öffnung des Umlaufkörpers (17) hin axial beansprucht ist, wobei diese Stützscheibe (12) auf den Zentrierkegel (7)—wenn dieser in der Felge (8) von ihrer Hinterseite her eingeführt ist—einen Druck ausübt, der dem Druck einer Aussenspannvorrichtung (9, 10, 25) zum Spannen der Felge (8) gegen dem Umlaufkörper (17) entgegengesetzt wirkt, wobei die Aussenspannvorrichtung auch zum Spannen des Zentrierkegels (14) verwendet wird, der in die Felge (15) von ihrer Vorderseite her eingeführt werden soll;

b. eine auf Seite der zentralen Öffnung des Umlaufkörpers in der Stirnseite des Kranzes (18) frei drehbar gelagerte Scheibe (19), mit einer Reihe Nuten (26), die an den Radien der Scheibe (19) um einen vorbestimmten Winkel (α) geneigt und so angeordnet sind, dass bei einer bestimmten Winkellage der Scheibe (19) eins ihrer Enden gegenüber entsprechenden Löchern (21) steht, die im Kranz (18) angebracht sind, wobei diese Anordnung die Möglichkeit gibt, am Kranz (18) eine Reihe Schwenkzapfen (28) mit je einer Schwenkachse (31) anzulenken, die in eines der genannten, im Kranz angebrachten Löcher (21) eingeführt werden kann, wobei eine Nase auf der Seite der Scheibe (19) vorspringt und somit in der entsprechenden Nute (26) gleitgeführt werden kann, sowie mit einem Schraubenbolzen (29) zur Befestigung der Felge (49), wenn das auszuwuchtende Rad durch die Löcher seiner Felge (49) befestigt werden soll, wobei die Schraubenbolzen (29) der Schwenkzapfen (28) durch diese Löcher gehen und die Zahl der letzten der Zahl der Löcher der Felge (49) gleichkommt;

c. Mittel (20) zur Begrenzeung der Axialverstellung der Stützscheibe (12) unter dem Druck des federnden Organs (11), wenn die Vorrichtung nicht mit einem Zentrierkegel (7) verwendet wird, der in der Felge von ihrer Hinterseite her eingeführt ist.

2. Vorderteil einer Radauswuchtmaschine nach Anspruch 1, dadurch gekennzeichnet, dass die Mittel zur Begrenzung der Axialverstellung der Stützscheibe (12) aus innerhalb des Umlaufkörpers (17) radial eingefügten Nasen (20 bestehen, gegen welche der Umfang der Stützscheibe (12) zur Anlage kommt, wobei die Lage dieser radial innerhalb des Umlaufkörpers eingefügten Nasen und die Form der Stützscheibe (12) so gestaltet sind, dass die Seite der Stützscheibe, die zur zentralen Öffnung des Umlaufkörpers gerichtet ist, nun ungefähr in der vertikalen Ebene liegt, die auf der Seite der zentralen Öffnung des Umlaufkörpers die Stirnseite des Kranzes (18) enthält.

3. Vorderteil einer Radauswuchtmaschine nach einem der Ansprüche 1 und 2, dadurch gekennzeichnet, dass die Scheibe (19) mit dem Umlaufkörper (17) durch einen Sicherungsring (27) kraftschlüssig verbunden ist, der in entsprechenden Ringnuten des Umlaufkörpers (17) und der Scheibe (19) eingebettet ist.

4. Vorderteil einer Radauswuchtmaschine nach einem der Ansprüche 1 bis 3, dadurch gekennzeichnet, dass er zum Auswuchten von Motorradrädern eine Planscheibe (40), die mit Organen (48) zur Befestigung des Rades versehen und mit dem Kranz (18) des Umlaufkörpers (17) durch Schrauben (47) verbunden ist, die in den Löchern des Kranzes (18) eingeführt sind, sowie eine Achse (36) aufweist, die koaxial auf dem Auswuchtdorn befestigt und mit Gleitkegeln (37, 38) zum Zentrieren der Radfelge auf der Achse (36) versehen ist.

5. Vorderteil einer Radauswuchtmaschine nach einem der Ansprüche 1 bis 3, dadurch gekennzeichnet, dass er zum Auswuchten bestimmter Räder wie Räder für Lastkraftwagen und Nutzfahrzeuge mit einer Planscheibe (41) versehen ist, die auf dem Auswuchtdorn (6) zentriert und mit dem Kranz (18) durch Schrauben (42) befestigt ist, die durch Löcher des Kranzes geführt sind, wobei Löcher (43), die den Löchern des auszuwuchtenden Rades entsprechen, am Umfang dieser Planscheibe (41) durchgebohrt sind.

6. Vorderteil einer Radauswuchtmaschine nach einem der Ansprüche 1 bis 5, dadurch gekennzeichnet, dass der Umlaufkörper (17) auf dem Auswuchtdorn (6) ständig befestigt oder auf einen anderen Vorderteil (44) einer Radauswuchtmaschine anpassbar ist, mit welchem er zum Beispiel mit Hilfe von Schrauben (45) kraftschlüssig verbunden werden kann.

**Claims**

1. Nose unit for a vehicle-wheel balancing machine, comprising:

— a spindle (6) capable of being driven in rotation;
— first means for balancing wheels which entail the need for centering by centering cone (7, 14);
— second means for balancing wheels which entail the need for centering by the mounting holes of said wheels;

said first and second balancing means being constituted in combination by a hollow body of revolution (17) attached coaxially to the spindle (6), having an external annular flange (18) which is intended to serve as a support for the abutting application of the rim (8, 15, 49) of the wheel, this annular flange being such as to delimit the central opening of the body, characterized in that these first and second balancing means also comprise:

a) a cup (12) housed within the body (17) in coaxial relation to the spindle (6) and urged axially towards the central opening of the body (17) by a resilient member (11) applied against the end-wall of the body (17), this cup (12) being such as to exert a thrust on the centering cone (7) when this latter is engaged within the rim (8) on the rear side of this latter, the direction of thrust being opposite to the direction of the thrust exerted by an external device (9, 10, 25) for clamping the rim (8) against the body (17), said external clamping device being also employed for clamping the centering cone (14) to be engaged in the rim (15) on the front side of this latter;

b) a disk (19) mounted in a freely rotatable manner in the front face of the annular flange (18) on the same side as the central opening of the body, provided with a series of grooves (26) which are inclined at a predetermined angle (α) with respect to the radii of the disk (19) and which are so arranged that, in a predetermined angular position of the disk (19), one of their extremities is located opposite to corresponding holes (21) formed in the annular flange (18), this arrangement being such as to permit pivotal mounting on the annular flange (18) of a series of pivotal crankplates (28) each provided with a pivotal bolt (31) which can be engaged in one of said holes (21) formed in the annular flange, a dowel-pin (33) which projects on the side nearest the disk (19) in order to be capable of sliding within the corresponding groove (26) and a stud (29) for securing the rim (49) when the wheel to be balanced has to be fixed by means of the holes of its rim (49) which are traversed in that case by the studs (29) of the crank-plates (28), these latter being equal in number to the number of holes of the rim (49).

c) means (20) adapted to limit the axial displacement of the cup (12) under the thrust of the resilient member (11) when the device is not employed with a centering cone (7) which is engaged in the rim on the rear side of this latter.

2. Balancing machine nose unit in accordance with claim 1, characterized in that the means adapted to limit the axial displacement of the cup (12) consist of dowel pins (20) which are fitted radially within the body (17) and against which the periphery of the cup (12) is abuttingly applied, the position of these dowel-pins which are fitted radially within the body and the shape of the cup (12) being such that the face of this latter which is directed towards the central opening of the body is accordingly placed approximately in the vertical plane containing the front face of the annular flange (18) on the same side as the central opening of the body.

3. Balancing-machine nose unit in accordance with either of claims 1 and 2, characterized in that the disk (19) is maintained attached to the body (17) by means of a retainer-ring (27) housed within corresponding annular grooves of the body (17) and of the disk (19).

4. Balancing-machine nose unit in accordance with one of claims 1 to 3, characterized in that, for the purpose of balancing motorcycle wheels, it comprises a mounting-plate (40) provided with members (48) for attachment of the wheel and rigidly fixed to the annular flange (18) of the body (17) by means of screws (47) introduced within the holes of the annular flange (18), as well as a rod (36) attached coaxially to the spindle (6) and provided with sliding cones (37, 38) which are capable of centering the rim of the wheel on the rod (36).

5. Balancing-machine nose unit in accordance with one of claims 1 to 3, characterized in that, for the purpose of balancing certain wheels such as the wheels of heavy trucks and commercial vehicles, it is provided with a mounting-plate (41) centered on the spindle (6) and attached to the annular flange (18) by means of screws (42) passed through the holes of this latter, holes (43) corresponding to the holes of the wheel to be balanced being pierced at the periphery of this mounting-plate (41).

6. Balancing-machine nose unit in accordance with one of claims 1 to 5, characterized in that the body (17) is stationarily fixed on the spindle (6) or adaptable to another balancing-machine nose unit (44) to which it can be rigidly fixed for example by means of screws (45).

Fig:1

Fig:2

0 056 544

Fig:4

Fig:3

0 056 544

Fig.5

Fig.6

Fig.7

0 056 544

Fig: 8

Fig: 10

Fig: 9

4